# EUROPEAN PATENT APPLICATION

(11) **EP 4 043 752 A2**
(43) Date of publication of application: **17.08.2022**
(21) Application number: 20875583.5
(22) Date of filing: 07.10.2020
(51) Int. Cl.: F16F 15/03, B60G 17/06

(54) **MATRIX ELECTROMAGNETIC-SUSPENSION SYSTEM FOR TRANSPORTATION VEHICLES**

(30) Priority: 08.10.2019 ES 201930875
(71) Applicant: Zeleros Global, S.L., 46024 Valencia (ES)
(72) Inventor: FONS SÁNCHEZ, Daniel, 46024 VALENCIA (ES); GONZÁLEZ ROJO, José Félix, 46024 VALENCIA (ES); ORIENT MARTÍN, Daniel, 46024 VALENCIA (ES)
(74) Representative: Ungria López, Javier
(86) International application number: PCT/ES2020/070605
(87) International publication number: WO 2021/069782

(57) **Abstract**

The present invention relates to a matrix electromagnetic-suspension system attachable to transportation vehicles, which comprises a plurality of electromagnetic-suspension modules, wherein each module comprises: an armature; a coil wound on the armature; an adjustable power source connected to the coil, configured to control the intensity of a first magnetic field; and two permanent magnets disposed in contact with the armature, by means of opposite poles, which generate a second magnetic field, wherein the plurality of modules is disposed in a matrix which ensures that the adjacent poles of the permanent magnets of adjacent modules have the same polarity.

## Description

### OBJECT OF THE INVENTION

The present invention relates to the technical field of high-speed transportation systems and more specifically to transportation systems with on-board electromagnetic lift systems.

### BACKGROUND OF THE INVENTION

Magnetic suspension is a phenomenon that has been studied for more than 50 years and which, due to the development of high-speed trains, has experienced greater growth in terms of research, validation and application in recent years. The different types of magnetic suspension, or levitation, can be grouped based on their technology as: electromagnetic suspension (EMS); electrodynamic suspension (EDS) or hybrid electromagnetic suspension (HEMS).

In general terms, EMS enables static suspension with the drawback that it requires a complex control component to adjust the distance and high energy consumption for medium and high loads. In contrast, EDS has a lower control complexity and a reduced consumption inherent to the levitation system, but instead requires a relative speed between the system and the aerofoil, in addition to requiring guidance. The third alternative, HEMS, represents an intermediate solution wherein complex control is required, but it has lower consumption due to the use of permanent magnets that provide an intense field at zero current.

Moreover, within HEMS-based systems a distinction can be made between two configurations, those that integrate guidance and suspension and those that keep them separate. Integration in HEMS technology is associated with lower energy consumption but has other complications associated with interference due to increased speed, as well as greater construction difficulty and the increase in required controllers.

However, the most avant-garde means of transportation, especially those related to the Hyperloop concept, are proposing low-pressure environments in a transportation tube that require a review of these technologies to take advantage of their infrastructure as a levitation and guidance integration surface.

The state of the art is in a continuous development of levitation systems applicable to the aforementioned high-speed means of transportation. Proposals for controllable systems are known in the state of the art that increase, as far as possible, the force/consumption ratio, compared to others that sacrifice minimising the surface compared to the improvement of control response or that seek an improvement in efficiency by reducing the losses in the windings. Thus, in general, these proposals resort to magnet-electromagnet contact systems, which implies a thermal problem in low pressure systems such as the aforementioned Hyperloop, or are limited to a single permanent magnet, which reduces efficiency compared to volume and consumption to reach high forces.

In general, one of the major problems added to the known systems appears when it is necessary to scale them for the loads associated with a passenger or freight transportation system, wherein the increase in force associated with the increase in the size of the magnets or the windings entails an increase in size, weight and consumption in greater proportion and, therefore, a significant reduction in the efficiency of the final system due to increased losses.

Until now, one of the few known solutions is to use a combination of permanent magnets, known as a Halbach array, which enables the magnetic field to be strengthened on one side of the array while eliminating the magnetic field on the opposite side, or instead of permanent magnets to replace or combine these with equivalent electromagnets that can use high consumption to generate even greater forces. However, these solutions pose some drawbacks, mainly in the scaling of the system, which does not maintain the relationship between consumption, size and force or assembly complexity, since the magnets are geometrically disposed in an unnatural way, therefore they exert significant forces to vary their position.

In view of the foregoing, there is a lack in the state of the art of an efficient and stable magnetic lift system solution that can be easily scaled without losing efficiency and can be coupled to high-speed means of transportation.

### DESCRIPTION OF THE INVENTION

In order to achieve the objectives and avoid the aforementioned drawbacks, the present invention describes, in a first aspect, a matrix electromagnetic-suspension system that attachable to transportation vehicles which comprises a plurality of electromagnetic-suspension modules, wherein each of the modules comprises:
- an armature;
- a coil wound on the armature;
- an adjustable power source connected to the coil, configured to control the intensity of a first magnetic field (which can favour or oppose the second magnetic field); and
- two permanent magnets disposed in contact with the armature, by means of opposite poles, which generate a second magnetic field;

wherein the plurality of modules is disposed in a matrix which ensures that the adjacent poles of the permanent magnets of adjacent modules have the same polarity. Thus, advantageously, a scalable matrix in defined directions arises that provides a total force greater than the sum of the forces of the individual and independent modules, due to the reduction of dispersion losses.

The system of the present invention, in one of the embodiments thereof, comprises: a guide structure made of ferromagnetic material; at least one transportation vehicle, disposed coupled with the plurality of modules, configured to move under the guide structure; and wherein the adjustable power source is configured to provide a value of the first magnetic field that, in combination with the second magnetic field, provides a magnetic attraction force of the vehicle towards the guide structure that compensates for the weight of the vehicle. Thus, advantageously, the magnetic forces oppose the gravitational forces to lift and guide the vehicle and enable it to move at high speeds without mechanical contact with the guide structure.

In one of the embodiments of the invention, the guide structure is a tubular structure configured to enable the vehicle to move inside said tubular structure. In particular, it is contemplated that the tubular structure comprises a controlled low pressure atmosphere therein. Thus, advantageously, the present invention can be adapted to transportation infrastructures of the Hyperloop type.

Additionally, in one of the embodiments of the invention it is contemplated that a cooling circuit is added, configured to reduce the temperature between the coil and the magnets of the modules. Thus, advantageously, the operating range is increased and it is prevented the loss of useful life of the system due to the high heating that the currents required to manoeuvre very powerful magnets can cause.

In view of the foregoing, the magnetic suspension system of the present invention not only improves its efficiency when scaling, but also maintains the strength, size, weight and consumption ratio. The magnetic field it provides is adapted to the required operation due to the fact that the strength of the permanent magnets can be increased or reduced, with minimal consumption, by acting on the coil. However, unlike in other solutions of the state of the art, the permanent magnets are mechanically separated from the coil.

The ordered array of the unitary modules of the present invention advantageously enables a scalable matrix to be created in defined directions, wherein the total force is greater than the sum of the forces of the individual and independent modules due to the reduction of dispersion losses.

### BRIEF DESCRIPTION OF THE FIGURES

To complete the description of the invention, and for the purpose of helping to make the features thereof more readily understandable, according to a preferred exemplary embodiment thereof, a set of drawings is included wherein, by way of illustration and not limitation, the following figures have been represented:
- **Figure 1** represents a unitary levitation module, according to one of the embodiments of the invention.
- **Figure 2** represents two unitary modules and the magnetic field lines that are generated.
- **Figure 3** represents the advantageous association of two unitary modules in proximity and the resulting magnetic field lines.
- **Figure 4** represents a matrix of unitary magnetic levitation modules, according to one of the embodiments of the present invention.

### DETAILED DESCRIPTION OF THE INVENTION

The present invention discloses an electromagnetic-suspension system for high-speed transportation vehicles that levitate on a guide structure. It comprises a smart adjustment system wherein, by means of electromagnets, it controls the magnetic flux generated by a particular disposition of permanent magnets embedded in a magnetic circuit, wherein the disposition of permanent magnets takes advantage of the intrinsic qualities of said magnets to provide a magnetic field source as a force without energy cost to cause a certain mass (the transportation vehicle) to levitate in the vicinity of a ferromagnetic material.

It is known that the magnetic field generated by a single magnet closes around the magnet itself between the faces with different polarity, which causes a portion of the flux that the magnet could potentially generate to be lost when it closes on itself in the so-called *dispersion flux.* Instead, the system of the present invention minimises this dispersion flux by using a configuration based on unitary modules **11** of two permanent magnets, a coil and an armature, wherein the magnets are assembled ensuring that the poles on the armature are opposite, so that the field is channelled between them.

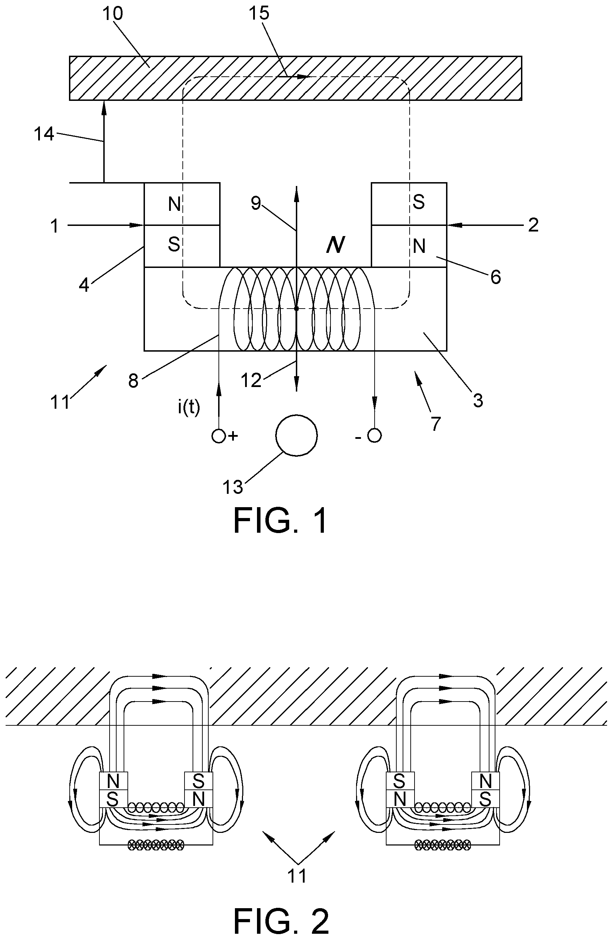

**Figure 1** shows this configuration, wherein a first magnet **1** and a second magnet **2** are disposed oriented with reverse polarity on an armature **3,** such that the south face **4** of the first magnet **1** and the north face **6** of the second magnet **2** are in direct contact with the surface of the armature **3.** Equivalently, in another embodiment not shown, the magnets are configured in reverse with the same result, i.e. the north face of the first magnet **1** and the south face of the second magnet **2** in direct contact with the surface of the armature **3.**

The magnetic circuit is completed with the electromagnet **7,** made up of a winding **8** around the armature **3,** such that during the actuation thereof (by means of the passage of current through the turns of the coil **8)** a magnetic field is induced in the direction of the magnetic flux Φ naturally generated by the disposition of the magnets **(1, 2),** the orientation and intensity thereof being adjustable by controlling the amount of electric current i(t) supplied in the winding from a power source **13** v(t), so that it is able to support or oppose said magnetic flux Φ **(15)** generated by the permanent magnets. The coil wound on the armature enables control of the flux that is channelled in the direction of the magnets. If the coil is excited in the direction of the flux of the magnets, the flux is favoured, otherwise, the magnetic flux is reduced.

The magnetic suspension system of the present invention is preferably on-board the transportation vehicle, such that its weight **12** can be compensated by the sum of magnetic forces **9** generated by the magnets **1, 2** and the electromagnet **7,** so that the vehicle moves magnetically suspended (without mechanical contact), in a controlled manner, at a predetermined distance **14** from a guide structure **10** made of ferromagnetic material. The guide structure is of the open rail type in one of the embodiments, but according to another of the embodiments of the invention, the guide structure is integrated into a transportation tube with low pressure conditions of the Hyperloop type.

The configuration of the embodiment represented in **Figure 1****,** achieves a highly efficient system that uncouples the electromagnet **7** and the permanent magnets **1, 2,** but that takes full advantage of the passive force of said permanent magnets by directing and adjusting the magnetic flux with minimal consumption. In addition, this distribution minimises the problems of thermal dissipation, especially present in low pressure environments, so that it is advantageous in Hyperloop-type transportation systems, developed to move transportation vehicles inside a closed tube with low pressure conditions.

This disposition of the elements described and represented in **Figure 1****,** has various advantages, on the one hand, the open disposition of magnets and armature facilitates assembly and allows for a larger surface on which to perform the fastenings of the transportation vehicle to the structure. On the other hand, it facilitates access to the entire geometry of the electromagnet **7,** also enabling, in one of the embodiments of the invention, the installation of a cooling system (not represented in the figures) that reduces the increase in temperature by conduction between coil **8** and permanent magnet **1, 2** with respect to the configurations known in the state of the art wherein the electromagnet is around the permanent magnet. This is especially relevant considering that some of the most powerful magnets, such as grade 52 Neodymium magnets, have a low maximum working temperature (between 60 and 150 °C) so that an excessive temperature results in a detriment of the useful life of the material due to permanent loss of strength.

Regarding the problem of scalability described above, which affects the known solutions of the state of the art by increasing the consumption and dimensions of the components in an inefficient manner, the present invention solves it by combining unitary modules such as those described in Figure 1 to provide a fully scalable magnetic suspension system.

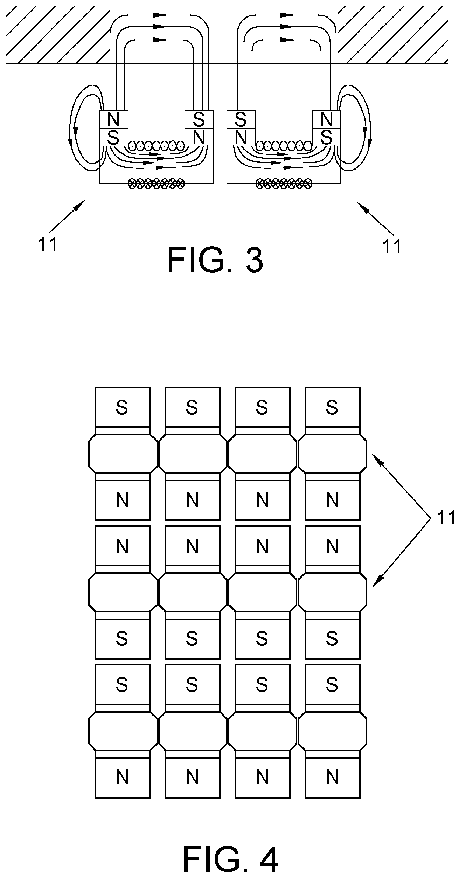

**Figure 2** represents two unitary modules **11,** configured to be one another's mirror image, and the magnetic field lines they generate. One of the main effects of the present invention is produced by bringing the modules **11** closer until almost completely reducing the space between them, as **Figure 3** shows, the redirection of the magnetic flux is optimised and the dispersion flow is minimised. In this way, the magnetic suspension system thus configured achieves greater efficiency in the use of the magnetic force, which translates into lower consumption. The disposition of the modules guarantees that the adjacent poles of the permanent magnets have the same polarity. Thus, in figure 3 the two permanent magnets that are in proximity are disposed with the north pole (N) contacting the respective armatures. If an additional module were added, both to the left and to the right of the two modules represented, the permanent magnet disposed in proximity to those already represented, would be configured with its south pole (S) in contact with its armature. In this way the matrix can be scaled indefinitely in any direction.

**Figure 4****,** represents an array of unitary modules **11** like the previous ones, disposed in various directions, thus achieving that the force of the assembly is greater than the sum of the forces independently generated by the elements. When scaled, the resulting modular electromagnetic suspension system can be compared to a *Halbach* permanent magnet layout but in this case the force empowered by the array can be adjusted, due to the electromagnets, as in the case of an isolated module. The ability to act on each unitary module makes it possible to compensate for defects associated with the manufacturing or the nature of the materials (such as different degrees of magnetisation, resistance of the windings or inductances), making it possible, therefore, to reach operating points close to the optimum in each of the modules **11,** with the only restriction of its mechanical attachment. In this way, the consumption for a levitation point close to the optimum of the system tends to 0.

The application of this configuration to a magnetic levitation vehicle makes it possible to have scaled force distributions that can be oriented and compensated taking advantage of the structure of the vehicle and the infrastructure, enabling not only the mass of the vehicle to levitate, but also the control thereof at the same time that disturbances associated with the internal elements of the vehicle or infrastructure defects are absorbed.

The present invention should not be limited to the embodiment described herein. Other configurations may be carried out by those skilled in the art based on the present description. Accordingly, the scope of the invention is defined by the following claims.

## Claims

1. A matrix electromagnetic-suspension system attachable to transportation vehicles which comprises a plurality of electromagnetic-suspension modules (11), wherein each of the modules comprises:
- an armature (3);
- at least one coil (8) wound on the armature;
- an adjustable power source (13) connected to the coil, configured to control the intensity of a first magnetic field; and
- two permanent magnets (1, 2) disposed in contact with the armature, by means of opposite poles, which generate a second magnetic field;
wherein the plurality of modules is disposed in a matrix which ensures that the adjacent poles of the permanent magnets of adjacent modules have the same polarity.

2. A system according to claim 1 which further comprises:
- a guide structure (10) made of ferromagnetic material; and
- a transportation vehicle, disposed coupled with the plurality of modules, configured to move under the guide structure; and
wherein the adjustable power source is configured to provide a value of the first magnetic field that, in combination with the second magnetic field, provides a magnetic attraction force (9) of the vehicle towards the guide structure that compensates for the weight (12) of the vehicle.

3. A system according to claim 2, wherein the guide structure (10) is a tubular structure configured to enable the vehicle to move inside said tubular structure.

4. A system according to claim 3, wherein the tubular structure comprises a controlled low pressure atmosphere therein.

5. A system according to any of the preceding claims which further comprises a cooling circuit configured to reduce the temperature between the coil and the magnets of the modules.
